# EUROPEAN PATENT SPECIFICATION

(11) **EP 0 831 058 B1**
(45) Date of publication and mention of the grant of the patent: **17.01.2001**
(21) Application number: 97402184.2
(22) Date of filing: 19.09.1997
(51) Int. Cl.: C01B 31/14

(54) **Shaped lignocellulosic-based activated carbon**
Geformte Aktivkohle auf der Basis von Lignocellulose
Charbon actif en forme à base de lignocellulose

(30) Priority: 19.09.1996 US 716105; 19.09.1996 US 716106
(43) Date of publication of application: 25.03.1998
(73) Proprietor: WESTVACO CORPORATION, New York New York 10171 (US)
(72) Inventor: Miller, James R., Mt. Pleasant, SC 29464 (US)
(74) Representative: Portal, Gérard

(56) References cited:
- EP-A- 0 795 516
- US-A- 3 966 639
- US-A- 4 677 086
- US-A- 5 389 325
- PATENT ABSTRACTS OF JAPAN vol. 010, no. 258 (C-370), 4 September 1986 & JP 61 083612 A (PENTEL KK), 28 April 1986,

## Description

### BACKGROUND OF THE INVENTION

### 1. Field of the Invention

This invention relates to are active carbon pellet prepared by extruding activated lignocellulosic-based carbon with a binder material. More particularly, the invention relates to an improved active carbon pellet characterized by low void volume and low dust attrition.

### 2. Description of the Prior Art

Granular carbons and carbon pellets are typically used in columns or beds for gas and vapor systems as well as for processing a number of liquids. Such carbons have been used in canisters in automobiles through which gasoline tank and carburetor vapors are directed prior to release to the environment. To qualify for this application, a carbon must possess sufficient mechanical strength to withstand the abrasion incident to continued use.

There generally is a direct correlation between the mechanical strength of the granular activated carbon product and the mechanical strength of its precursor raw material. Thus, coal-based active carbon generally exhibits a high mechanical strength and density; whereas, lignocellulosic-based active carbons, derived from a much "softer" precursor relative to coal, generally exhibit low mechanical strengths and densities.

Also, gas-adsorbing carbons should be as dense as is consistent with high adsorption capacity so as not to require a large space for the adsorber. The development of high adsorption capacity during thermal activation, however, is accompanied by a loss of mechanical strength and density; therefore, some compromise is required in selecting the degree to which the activation is conducted. So, with lignocellulosic precursors (or, for lignocellulosic-based active carbons), the problem is compounded.

Several approaches have been taken to address the problem of low mechanical strength and density of lignocellulosic-based active carbons. In U.S. Patent No. 3,864,277, Kovach emphasizes the binder additive in teaching the phosphoric acid activation of wood, straw, or low-rank brown coals in the presence of a carbonaceous binder material such as lignosulfonates and polyvinyl alcohol, followed by forming solid granular shaped particles from the mixture, and heat-treating at less than 650°C to give a granular product having a ball-pan hardness of greater than 85%. Given the teaching of Kovach and employing the knowledge of the relationship of precursor mechanical strength and density with those characteristics of the active carbon product, MacDowall (in U.S. Patent No. 5,162,286) teaches increasing lignocellulosic-based active carbon density by the use of young carbonaceous vegetable products high (〉30%) in natural binding agent, such as nut shell, fruit stone, almond shell, and coconut shell, as precursors for treatment with phosphoric acid followed by carbonization.

A third approach, which relates to the present invention, is taught by McCue et al. in U.S. Patent No. 4,677,086. To achieve, in a wood-based active carbon, the mechanical strength and product density approaching that achieved with coal-based products, McCue et al. teach extruding an active wood-based carbon with bentonite clay, followed by calcining the extruded active carbon/clay pellets. This technology has been the basis for the commercial products NUCHAR® BAX-950 and NUCHAR® BAX-1100 marketed by Westvaco Corporation.

In addition to gas column (or, packed bed) requirements for high mechanical strength and high density, it is also desirable to reduce the bed void volume in order to maximize the carbon content of the bed, and subsequently maximize the adsorptive capacity. This is primarily determined by the shape of the granular or pellet carbon. In fact, because of the irregular shape of granular carbon, regularly shaped carbon pellets are preferred for their better "packing." However, as a result of uneven cutting of the extrudate to form the pellets, the pellets are usually irregularly shaped, and fissures and cavities often appear along the pellet surface. This creates two problems. The resulting irregularities in shape prevent optimization of bed (or column) packing and detract from maximizing the carbon content for a given peller volume. In addition, the surface irregularities are often removed from the pellet due to abrasion. These material losses, in addition to debris caused by cutting the pellets to size, present another problem: dust.

Besides having a product which may appear to disintegrate, attrited dust in a packed bed, such as a column or an automotive canister, can fill the bed voids to create high pressure drops and impede the flow-through of vapors to be treated. A particular problem in the automotive application is concern that the dust will act to interfere with various sensing devices connected to the canister to monitor performance.

Typically, dusting due to abrasion, or dust attrition, may be retarded or precluded by spraying a coating on the surface of the pellet. Invariably, this remedy is at the expense of butane working capacity; thereby providing another trade-off for the working life of the active carbon material.

One solution to this recognized need is described in parent U.S. Patent Application Serial No. 08/609,632, filed March 12, 1996, and related U.S. Patent Application Serial No. 08/613,270, filed March 8, 1996, teaching an improved lignocellulosic-based activated carbon pellet of a smoother surface and more uniform shape which provides optimal bed packing and which exhibits increased density and is less susceptible to dust attrition and the method of its manufacture using an inorganic binder material. That invention represents an improvement of that disclosed in U.S. Patent No. 4,677,086, based on bentonite clay as a binder for activated lignocellulosic-based carbon in an extrusion process. The parent ('632) and related ('270) applications teach tumbling the extruded pellet prior to heat treating to dry/calcine.

During the development of the improved active carbon pellet, it was surprisingly discovered that substitution of the inorganic clay binder with an organic binder material provided a dramatic reduction in both initial dust and dust attrition.

### BRIEF DESCRIPTION OF THE DRAWINGS

FIGURE 1 shows a block flow diagram of the invention process wherein tumbling is carried out on the green extrudate, followed by drying and calcination.

FIGURE 2 shows a block flow diagram of the invention process whereby tumbling is carried out on the green extrudate as it is being dried, followed by calcination.

### SUMMARY OF THE INVENTION

The object of the invention is achieved in the discovery that extruded pellets comprising a major portion of activated carbon particles and a minor portion of organic binder provides improved performance when processed through tumbling equipment while the pellets are in their "green" state. Green pellets are those which are fresh off the extruder and contain activated carbon, binder, and water (from 50-70% water, by weight) and have not been subjected to any thermal processing (drying). The tumbling action both smoothes the pellets (by sealing, or otherwise closing, any cracks and greatly improving appearance) and increases the density of the packed bed e.g., by increasing particle density and reducing voids between the pellets. (Interestingly, debris caused by cutting the pellets to size is assimilated by the tumbling pellets.) Improved performance results from an ability to increase the weight of carbon pellets which can be packed into a fixed volume and thereby increase the volumetric working capacity of the bed for adsorbing/desorbing vapors. Another benefit is to greatly reduce the levels of dust associated with the carbon, both the initial dust and the dust of attrition.

### DESCRIPTION OF THE PREFERRED EMBODIMENT(S)

The process steps for the alternative embodiments of the invention process are set forth in the drawings. The process steps are described in greater detail in the Examples which follow. Basically, the blend of activated lignocellulosic-based carbon, binder material, and water are mixed and then fed through an extrusion device. The generally continuous extrudate is cut at consistent intervals to produce a cylindrical pellet, relatively uniform in length and diameter.

The invention process improvement involves taking these "green" pellets, *i.e.,* soon after they are generated (50-70% moisture content, by weight), and subjecting them to a tumbling process for a period of time sufficient to produce a pellet that, upon subsequent drying, exhibits a dust attrition rate of less than 0.75 mg/100 cc/minute. In particular, it has been found that the tumbling step is effective to provide the improved composition of the invention if it is performed in lieu of immediately drying the green pellets in additional equipment.

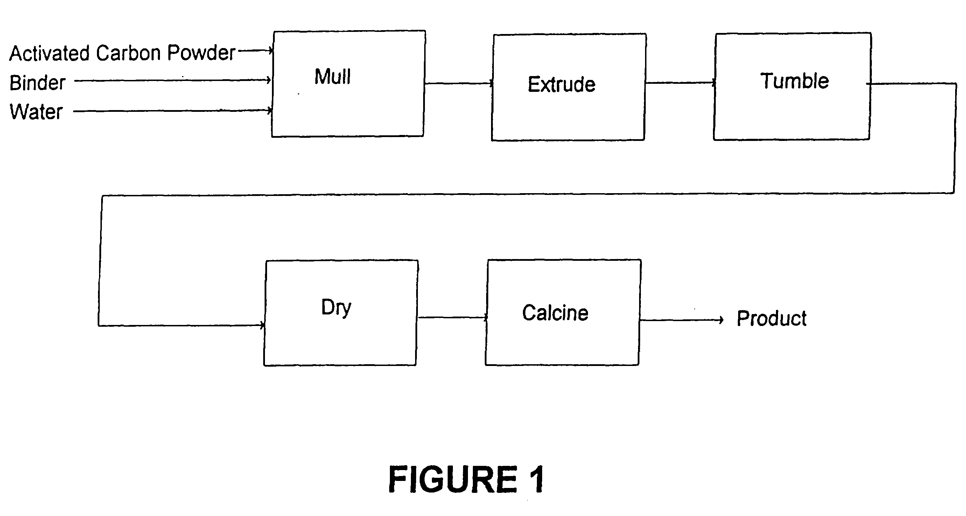

More specifically, the invention process for preparing an active carbon pellet comprises the steps of:
(a) grinding granular activated lignocellulosic-based carbon to a fine powder;
(b) mixing the activated lignocellulosic-based carbon powder with a lesser amount of an organic binder material selected from the group consisting of natural and synthetic resins in the presence of water;
(c) extruding the mixture to produce an extrudate which is cut to form green pellets are characterized by 50-70% moisture content, by weight;
(d) subjecting the green pellets to a tumbling operation for from about 1 to about 30 minutes;
(e) subjecting the pellets to sufficient heat to remove the moisture therefrom; and
(f) heat treating the dried pellets at from about 371°C (700°F) to about 981°C (1800°F) in an inert atmosphere for a period from about 0.1 to about 1.0 hours,
wherein the final active carbon pellets are characterized by a dust attrition rate less than 0.75 mg/100 cm³/minute, in the absence of an applied coating on the pellet. This is the process illustrated in the flow diagram of Figure 1.

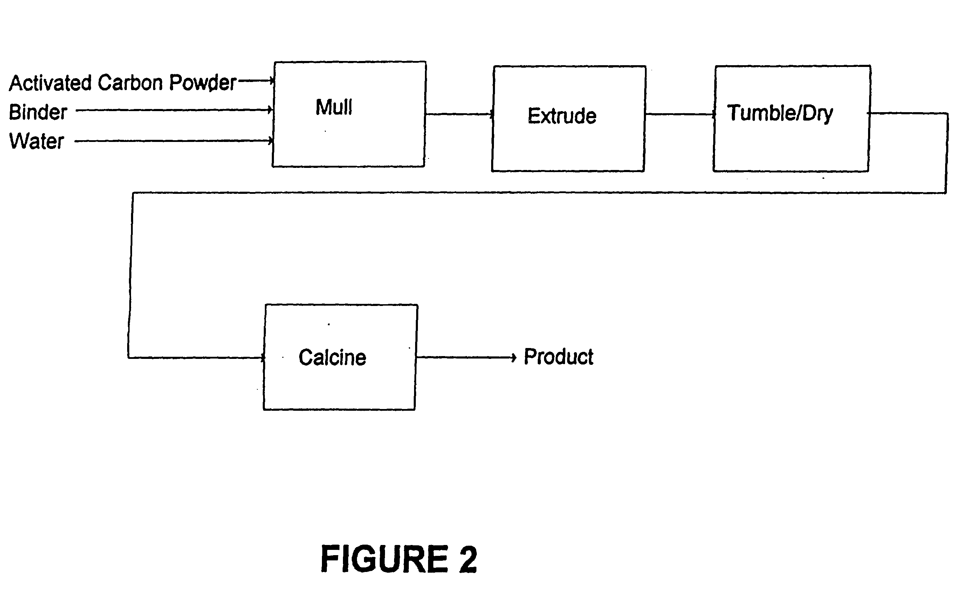

In an alternative embodiment of the invention process, as indicated in the flow diagram of Figure 2, the tumbling operation may be conducted at sufficient temperatures and for a sufficient time to remove the moisture from the pellets, which can then be subjected to the heat treatment. Thus, steps (d) and (e) may be conducted concurrently in a single operation.

It is envisioned that the moisture level of the green pellets is important in the effectiveness of the tumbling step, and that a critical moisture level may exist below which densification and reduction of dust levels may not occur. As a result, in an additional embodiment of the invention, the tumbling equipment can also be used to dry the green pellets, if the drying rate is kept to a level low enough to give a sufficient residence time before the critical moisture level is reached. The critical moisture level is in the range of 50-70% water, by weight. A preferred moisture level is 55-65% water, by weight. The most preferred moisture level for the tumbling operation of the green pellets is 58-62% water, by weight.

The lignocellulosic material precursor to the lignocellulosic-based active carbon used in the invention process to form the invention composition is selected from the group of lignocellulosic materials consisting of wood chips, wood flour, sawdust, coconut shell, nut shells, fruit pits, kernal, olive stone, and almond shell.

The organic binder materials may include natural resins, such as wood rosin, gum rosin, or tall oil rosin based compounds, or synthetic resins, such as styrenic, acrylic, or phenolic based compounds (such as phenol-formaldehyde resin).

Due to the adhesive properties of these organic binders, some improvement in initial dust and dust attrition may be expected. However, the dramatic improvements achieved by the present invention were wholly unexpected and entirely surprising.

In the Examples to follow, the various analyses were performed in measurements determining the benefits of the invention product and process:
Apparent Density (AD)- ISO No. 960-050: weight of dry carbon per unit volume of the carbon bed;
Butane Working Capacity (BWC)- ISO No. 960-080: weight of butane purged from a sample of dried carbon after it had been saturated with butane per unit volume of the carbon bed;
Dusting Attrition (DA) - ISO No: 960-380: weight of dust attrited from a 100 ml sample of carbon per unit time;
Initial Dust (ID)- same as dusting attrition: weight of dust initially present on a 100 ml sample of carbon prior to attrition test;
Actual Pellet Density (APD); weight of dry carbon per unit volume of entire carbon pellet. Determined using mercury porosimetry;
Base Pellet Density (BPD); weight of dry carbon per unit volume of carbon pellet including only pore space less than 0.5 microns equivalent diameter. Determined using mercury porosimetry;
Bed Void Fraction (BVF): volume of space between carbon pellets per unit volume of carbon bed. Determined by the equation I - (AD/APD); and
Pellet Void Fraction (PVF) (pellet interparticle void fraction): volume of space within a carbon pellet including only pore space greater than 0.5 microns equivalent diameter per unit volume of entire carbon pellet. Determined by the equation 1 - (APD/BPD).

The invention process and composition are further described in the following examples:

### Example 1

Ground lignocellulosic-based activated carbon was mixed with novalac® resin (a phenol-formaldehyde resin), carboxymethyl cellulose (CMC), and water in a Muller mixer. The dry basis novalac® concentration was 10 wt%, and the dry basis CMC concentration was 5 wt%. The mixture was mulled until it reached a consistency which could be extruded. It was extruded in a single screw auger extruder through a die plate containing 2 mm holes and cut as it exited the die plate into "green" pellets ranging in length from 2-6 mm. The green pellets had a moisture content of approximately 60 wt% (wet basis). Following extrusion, a portion of the green pellets was taken and loaded into a rotating drum in order to tumble the pellets. The drum was angled above the horizontal to retain the pellets and rotated at 30 rpm for 5 mins. Following this both portions of the pellets ("tumbled" and "not tumbled") were dried in a batch convection oven. The portion of green pellets which was not tumbled was dried in a batch convection oven. The two batches of dried pellets were heated separately to 926°C (1700°F) in a batch indirect-fired rotary furnace for 15 minutes. Following this heat treatment, i.e., calcination, they were discharged and cooled separately under a nitrogen purge prior to analysis.

The pertinent properties are shown in Table I.

**TABLE I**

| Batch I.D. | PD (g/ cm³) | BVF (%) | AD (g/cm³) | ID (mg/100 | DA (mg/100cm³) min) |
|---|---|---|---|---|---|
| X-96-0082 -Not Tumbled- | 0.639 | 40.0 | 0.3833 | 13.3 | 0.778 |
| X-96-0083 -Tumbled- | 0.668 | 36.7 | 0.4229 | 3.54 | 0.256 |

Initial dust decreased by 73% and dust attrition decreased by 67%. Also, particle density is improved (by its increase), as is the bed void fraction (by its decrease).

### Example 2

In an alternative embodiment of the invention process, ground lignocellulosic-based activated carbon was mixed with novalac® resin (a phenol-formaldehyde resin), carboxymethyl cellulose (CMC), and water in a Muller mixer. The dry basis novalac® concentration was 10 wt%, and the dry basis CMC concentration was 5 wt%. The mixture was mulled until it reached a consistency which could be extruded. It was extruded in a single screw auger extruder through a die plate containing 2 mm holes and cut as it exited the die plate into "green" pellets ranging in length from 2-6 mm. The green pellets had a moisture content of approximately 55 wt% (wet basis). Following extrusion, a portion of the green pellets was taken and loaded into a rotating drum in order to tumble the pellets. The drum was angled above the horizontal to retain the pellets and rotated at 30 rpm for 2 hours. During this time, the pellets were dried by blowing heated air into the rotating drum. The portion of green pellets which was not tumbled was dried in a batch convection oven. The two batches of dried pellets were calcined separately to 926°C (1700°F) in a batch indirect-fired rotary furnace for 15 minutes. Following calcination, they were discharged and cooled separately under a nitrogen purge prior to analysis.

The pertinent properties are shown in Table II.

**TABLE II**

| Batch I.D. | AD (g/cm³) | ID (mg) | DA (mg/min) |
|---|---|---|---|
| 920-A-6 -Not Tumbled- | 0.432 | 9.35 | 0.815 |
| 920-A-5 -Tumbled- | 0.440 | 1.10 | 0.060 |

Initial dust decreased by 88% and dust attrition decreased by 92%.

As will be appreciated by those skilled in the art, the present invention may be embodied in other specific forms without departing from the essential attributes thereof; and, accordingly, reference should be made to the appended claims, rather than to the foregoing specification, as indicating the scope of the invention..

## Claims

1. An improved composition of an active carbon pellet comprising activated lignocellulosic-based carbon particles with an organic binder material, characterised in that the improvement comprises active carbon pellets characterised by a dust attrition rate less than 0.75 mg/100 cm³/minute according to ISO No. 960 - 380, in the absence of an applied coating on the pellet.

2. The improved composition according to claim 1, characterised in that the organic binder material is a resin, preferably a natural resin, such as a rosin compound based on wood rosin, gum rosin, or tall oil, or a synthetic resin such as a styrenic-based compound, an acrylic-based compound or a phenolic-based compound.

3. The improved composition according to claim 1 or 2, characterised in that said organic binder material is a phenol-formaldehyde resin.

4. The improved composition according to any one of claims 1 to 3, characterised in that it comprises from 5% to 30%, by weight, organic binder material.

5. A process for preparing an active carbon pellet according to any one of claims 1 to 4, characterised in that it comprises the steps of:
(a) grinding granular activated lignocellulosic-based carbon to a fine powder;
(b) mixing the activated lignocellulosic-based carbon powder with a lesser amount of an organic binder material, such as a natural or a synthetic resin, in the presence of water;
(c ) extruding the mixture to produce an extrudate which is cut to form green pellets which are characterised by 50-70% moisture content, by weight;
(d) subjecting the green pellets to a tumbling operation for from about 1 to about 30 minutes;
(e) subjecting the pellets to sufficient heat for a sufficient time to remove the moisture therefrom; and
(f) heat treating the dried pellets at from about 371°C (700°F) to about 981°C (1800°F) in an inert atmosphere for a period of about 0.1 to about 1.0 hours, in which the final active carbon pellets are characterised by a dust attrition rate less than 0.75 mg/100 cm³/minute, in the absence of an applied coating on the pellet.

6. The process according to claim 5, characterised in that the organic binder material is a resin, preferably a natural resin, such as a rosin compound based on wood rosin, gum rosin, or tall oil, or a synthetic resin such as a styrenic-based compound, an acrylic-based compound or a phenolic-based compound.

7. The process according to claim 5 or 6, characterised in that the organic binder material is a phenol-formaldehyde resin.

8. The process according to any one of claims 5, 6 or 7, characterised in that it comprises from 5% to 30%, by weight, organic binder material.

9. The process according to any one of claims 5 to 8, characterised in that step (e) is conducted at a temperature up to 371°C (700°F).

10. The process according to any one of claims 5 to 9, characterised in that step (f) is conducted at from about 537°C (1000°F) to about 981°C (1800°F).

11. The process according to any one of claims 5 to 10, characterised in that said tumbling operation is conducted as a batch process in an apparatus such as a rotating disc pan pelletizer or a rotating drum, or is conducted as a continuous process in a device such as a rotating tumbling device or a vibrating/spiral screening device.

12. The process according to any one of claims 5 to 11, characterised in that said green pellets have 55-65% moisture content, by weight, preferably 58-62% moisture content, by weight.

13. The process according to any one of claims 5 to 12, characterised in that said tumbling operation is conducted up to 15 minutes.

14. A process for preparing an active carbon pellet according to any one of claims 1 to 4, characterised in that it comprises the steps of:
(a) grinding granular activated lignocellulosic-based carbon to a fine powder;
(b) mixing the activated lignocellulosic-based carbon powder with a lesser amount of an organic binder material, such as a natural or a synthetic resin, in the presence of water;
(c ) extruding the mixture to produce an extrudate which is cut to form green pellets which are characterised by 50-70% moisture content, by weight;
(d) subjecting the green pellets to a tumbling operation at a sufficient temperature and for a time sufficient to remove the moisture therefrom; and
(e) heat treating the dried pellets at from about 371°C (700°F) to about 981°C (1800°F) in an inert atmosphere for a period of about 0.1 to about 1.0 hours, in which the final active carbon pellets are characterised by a dust attrition rate less than 0.75 mg/100 cm³/minute, in the absence of an applied coating on the pellet.

15. The process according to claim 14, characterised in that the organic binder material is a resin, preferably a natural resin, such as a rosin compound based on wood rosin, gum rosin, or tall oil, or a synthetic resin such as a styrenic-based compound, an acrylic-based compound or a phenolic-based compound.

16. The process according to claim 14 or 15, characterised in that said organic binder material is a phenol-formaldehyde resin.

17. The process according to claim 14, 15 or 16, characterised in that it comprises from 5% to 30%, by weight, organic binder material.

18. The process according to any one of claims 14 to 17, characterised in that step (d) is conducted at from about 15°C (60°F) to about 371°C (700°F), for from about 1 to about 30 minutes.

19. The process according to any one of claims 14 to 18, characterised in that step (e) is conducted at from about 537°C (1000°F) to about 981°C (1800°F).

20. The process according to any one of claims 5 to 19, characterised in that said green pellets have 55-65% moisture content, by weight.

21. Use of an active carbon pellet according to any one of claims 1 to 4, or an active carbon pellet prepared as defined in any one of claims 5 to 20, in a packed bed for adsorbing/desorbing vapours.

## Patentansprüche

1. Verbesserte Zusammensetzung eines Aktivkohlepellets umfassend auf Lignocellulose basierende Aktivkohlepartikel mit einem organischen Bindemittel, dadurch gekennzeichnet, dass die Verbesserung Aktivkohlepellets umfasst, die bei Abwesenheit einer auf dem Pellet aufgebrachten Beschichtung durch eine Staubabriebsrate von weniger als 0,75 mg/100 cm³/Minute gemäß ISO No. 960-380 gekennzeichnet ist.

2. Verbesserte Zusammensetzung nach Anspruch 1, dadurch gekennzeichnet, dass das organische Bindemittel ein Harz ist, vorzugsweise ein natürliches Harz, wie beispielsweise ein Kolophonium-Kompound auf der Basis von Holz-Kolophonium, Gummi-Kolophonium oder Tall-Öl oder ein synthetisches Harz wie beispielsweise ein Kompound auf der Basis von Styrol, Acryl oder Phenol.

3. Verbesserte Zusammensetzung nach Anspruch 1 oder 2, dadurch gekennzeichnet, dass das organische Bindemittel ein Phenol-Formaldehyd-Harz ist.

4. Verbesserte Zusammensetzung nach einem der Ansprüche 1 bis 3, dadurch gekennzeichnet, dass die Zusammensetzung 5 bis 30 Gew.% organisches Bindemittel aufweist.

5. Verfahren zur Herstellung eines Aktivkohlepellets nach einem der Ansprüche 1 bis 4, gekennzeichnet durch die folgenden Verfahrensschritte:
(a) Mahlen von auf Lignolcellulose basierender körniger Aktivkohle zu einem Feinpulver;
(b) Mischen des auf Lignocellulose basierenden Aktivkohlepulvers mit einer geringeren Menge organischen Bindemittels, wie beispielsweise einem natürlichen oder synthetischen Harz, unter Zusatz von Wasser;
(c) Extrudieren der Mischung zur Herstellung eines Presslings, der zur Bildung von Grün-Pellets geschnitten wird, die einen Feuchtegehalt von 50 bis 70 Gew.% aufweisen;
(d) Aussetzen der Grün-Pellets einer Trommelbehandlung für etwa 1 bis etwa 30 Minuten;
(e) Aussetzen der Pellets einer ausreichenden Hitze während einer ausreichenden Zeit, um deren Feuchtigkeit zu entfernen; und
(f) Wärmebehandlung der getrockneten Pellets bei etwa 371°C (700°F) bis etwa 981°C (1800°F) in einer Schutzgasatmosphäre während einer Periode von etwa 0,1 bis 1,0 Stunde, wobei die endgültigen Aktivkohlepellets bei Abwesenheit einer auf dem Pellet aufgebrachten Beschichtung durch eine Staubabriebsrate von kleiner als 0,75 mg/100 cm³/Minute gekennzeichnet ist.

6. Verfahren nach Anspruch 5, dadurch gekennzeichnet, dass das organische Bindemittel ein Harz ist, vorzugsweise ein natürliches Harz, wie beispielsweise ein Kolophonium-Kompound auf der Basis von Holz-Kolophonium, Gummi-Kolophonium oder Tall-Öl oder ein synthetisches Harz wie beispielsweise ein Kompound auf der Basis von Styren, Acryl oder Phenol.

7. Verfahren nach Anspruch 5 oder 6, dadurch gekennzeichnet, dass das organische Bindemittel ein Phenol-Formaldehyd-Harz ist.

8. Verfahren nach Anspruch 5, 6 oder 7, dadurch gekennzeichnet, dass die Zusammensetzung 5 bis 30 Gew.% organisches Bindemittel aufweist.

9. Verfahren nach einem der Ansprüche 5 bis 8, dadurch gekennzeichnet, dass der Verfahrensschritt (e) bei einer Temperatur bis zu 371°C (700°F) durchgeführt wird.

10. Verfahren nach einem der Ansprüche 5 bis 9, dadurch gekennzeichnet, dass der Verfahrensschritt (f) bei etwa 537°C (1700°F) bis etwa 981°C (1800°F) durchgeführt wird.

11. Verfahren nach einem der Ansprüche 5 bis 10, dadurch gekennzeichnet, dass die Trommelbehandlung als Batch-Verfahren in einer Vorrichtung wie beispielsweise einer rotierenden Scheibenpelletiermaschine oder einer rotierenden Trommel durchgeführt wird oder als kontinuierliches Verfahren in einer Einrichtung wie beispielsweise einer rotierenden Trommeleinrichtung oder einer vibrierenden/spiralförmigen Siebeinrichtung.

12. Verfahren nach einem der Ansprüche 5 bis 11, dadurch gekennzeichnet, dass die Grün-Pellets einen Feuchtegehalt von 55 bis 65 Gew.%, vorzugsweise 58 bis 62 Gew.% aufweisen.

13. Verfahren nach einem der Ansprüche 5 bis 12, dadurch gekennzeichnet, dass die Trommelbehandlung bis zu 15 Minuten durchgeführt wird.

14. Verfahren zur Herstellung eines Aktivkohlepellets nach einem der Ansprüche 1 bis 4, gekennzeichnet durch die folgenden Verfahrensschritte:
(a) Mahlen auf Lignocellulose basierender körniger Aktivkohle zu einem Feinpulver;
(b) Mischen des auf Lignocellulose basierenden Aktivkohlepulvers mit einer geringeren Menge eines organischen Bindemittels, wie beispielsweise einem natürlichen oder synthetischen Harz, unter Zusatz von Wasser;
(c) Extrudieren der Mischung zur Herstellung eines Presslings, der zur Bildung von Grün-Pellets geschnitten wird, die durch einen Feuchtegehalt von 50 bis 70 Gew.% gekennzeichnet sind;
(d) Aussetzen der Grün-Pellets einer Trommelbehandlung bei einer ausreichenden Temperatur und während einer Zeit, die ausreichend ist, um die Feuchtigkeit aus den Grün-Pellets zu entfernen; und
(e) Wärmebehandlung der getrockneten Pellets von etwa 371°C (700°F) bis etwa 981°C (1800°F) in einer Schutzgasatmosphäre über eine Periode von etwa 0,1 bis etwa 1,0 Stunde, wobei die endgültigen Aktivkohlepellets bei Abwesenheit einer auf die Pellets aufgebrachten Beschichtung durch eine Staubabriebsrate von kleiner als 0,75 mg/100 cm³/Minute gekennzeichnet sind.

15. Verfahren nach Anspruch 14, dadurch gekennzeichnet, dass das organische Bindemittel ein Harz ist, vorzugsweise ein natürliches Harz, wie beispielsweise Kolophonium-Kompound auf der Basis von Holz-Kolophonium, Gummi-Kolophonium oder Tall-Öl oder ein synthetisches Harz wie beispielsweise ein Kompound auf der Basis von Styren, Acryl oder Phenol.

16. Verfahren nach Anspruch 14 oder 15, dadurch gekennzeichnet, dass das organische Bindemittel ein Phenol-Formaldehyd-Harz ist.

17. Verfahren nach Anspruch 14, 15 oder 16, dadurch gekennzeichnet, dass die Zusammensetzung 5 bis 30 Gew.% organisches Bindemittel aufweist.

18. Verfahren nach einem der Ansprüche 14 bis 17, dadurch gekennzeichnet, dass der Verfahrensschritt (d) von etwa 15°C (60°F) bis etwa 371°C (700°F) für etwa 1 bis 30 Minuten durchgeführt wird.

19. Verfahren nach einem der Ansprüche 14 bis 18, dadurch gekennzeichnet, dass der Verfahrensschritt (e) von etwa 537°C (1000°F) bis etwa 981°C (1800°F) durchgeführt wird.

20. Verfahren nach einem der Ansprüche 5 bis 19, dadurch gekennzeichnet, dass die Grün-Pellets einen Feuchtegehalt von 55 bis 65 Gew.% aufweisen.

21. Verwendung eines Aktivkohlepellets nach einem der Ansprüche 1 bis 4 oder eines nach einem der Ansprüche 5 bis 20 hergestellten Aktivkohlepellets, in einem Festbett zur Adsorption/Desorption von Dämpfen.

## Revendications

1. Composition améliorée d'une pastille de carbone actif comprenant des particules de carbone à base lignocellulosique activé avec un matériau liant organique, caractérisée en ce que l'amélioration comprend des pastilles de carbone actif caractérisées par une vitesse d'attrition en poussière inférieure à 0,75 mg/ 100 cm³/minute selon ISO n°. 960-380 en l'absence d'un revêtement appliqué sur la pastille.

2. Composition améliorée selon la revendication 1 caractérisée en ce que le matériau liant organique est une résine, de préférence une résine naturelle, comme un composé de la colophane basé sur la colophane de bois, la colophane de gomme, ou le tallol, ou une résine synthétique comme un composé à base styrénique, un composé à base acrylique ou un composé à base phénolique.

3. Composition améliorée selon la revendication 1 ou 2 caractérisée en ce que ledit matériau liant organique est une résine phénol-formaldéhyde.

4. Composition améliorée selon l'une quelconque des revendications 1 à 3 caractérisée en ce qu'elle comprend de 5% à 30%, en masse, de matériau liant organique.

5. Procédé pour préparer une pastille de carbone actif selon l'une quelconque des revendications 1 à 4 caractérisé en ce qu'il comprend les étapes de:
(a) broyage de carbone à base lignocellulosique activé granulaire en une poudre fine ;
(b) mélange de la poudre de carbone à base lignocellulosique activé avec une quantité moindre d'un matériau liant organique, comme une résine naturelle ou synthétique, en présence d'eau ;
(c) extrusion du mélange pour produire un produit d'extrusion qui est coupé pour former des pastilles crues qui sont caractérisées par une teneur en humidité de 50-70%, en masse ;
(d) soumission des pastilles crues à une opération de tonnelage pendant environ 1 à environ 30 minutes ;
(e) soumission des pastilles à une chaleur suffisante pendant une durée suffisante pour en retirer l'humidité ; et
(f) traitement thermique des pastilles séchées à une température d'environ 371°C (700°F) à environ 981°C (1800°F) dans une atmosphère inerte pendant une durée d'environ 0,1 à environ 1,0 heure, où les pastilles de carbone actif finales sont caractérisées par une vitesse d'attrition en poussière inférieure à 0,75 mg/100 cm³/minute, en l'absence d'un revêtement appliqué sur la pastille.

6. Procédé selon la revendication 5 caractérisé en ce que le matériau liant organique est une résine, de préférence une résine naturelle, comme un composé de la colophane basé sur la colophane de bois, la colophane de gomme, ou le tallol, ou une résine synthétique comme un composé à base styrénique, un composé à base acrylique ou un composé à base phénolique.

7. Procédé selon la revendication 5 ou 6 caractérisé en ce que le matériau liant organique est une résine phénol-formaldéhyde.

8. Procédé selon l'une quelconque des revendications 5, 6 ou 7 caractérisé en ce qu'il comprend de 5% à 30%, en masse, de matériau liant organique.

9. Procédé selon l'une quelconque des revendications 5 à 8 caractérisé en ce que l'étape (e) est conduite à une température pouvant atteindre 371°C (700°F).

10. Procédé selon l'une quelconque des revendications 5 à 9 caractérisé en ce que l'étape (f) est conduite à une température d'environ 537°C (1000°F) à environ 981°C (1800°F).

11. Procédé selon l'une quelconque des revendications 5 à 10 caractérisé en ce que ladite opération de tonnelage est conduite sous forme d'un procédé discontinu dans un appareil comme un granulateur à bac et disques rotatifs ou un tambour rotatif, ou est conduite sous forme d'un procédé continu dans un dispositif comme un dispositif de tonnelage rotatif ou un dispositif de criblage vibrant/à spirale.

12. Procédé selon l'une quelconque des revendications 5 à 11 caractérisé en ce que lesdites pastilles crues ont une teneur en humidité de 55-65%, en masse, de préférence une teneur en humidité de 58-62%, en masse.

13. Procédé selon l'une quelconque des revendications 5 à 12 caractérisé en ce que ladite opération de tonnelage est conduite pendant une durée pouvant atteindre 15 minutes.

14. Procédé pour préparer un grain de carbone actif selon l'une quelconque des revendications 1 à 4 caractérisé en ce qu'il comprend les étapes de :
(a) broyage de carbone à base lignocellulosique activé granulaire en une poudre fine ;
(b) mélange de la poudre de carbone à base lignocellulosique activé avec une quantité moindre d'un matériau liant organique, comme une résine naturelle ou synthétique, en présence d'eau ;
(c) extrusion du mélange pour produire un produit d'extrusion qui est coupé pour former des pastilles crues qui sont caractérisées par une teneur en humidité de 50-70%, en masse ;
(d) soumission des pastilles crues à une opération de tonnelage à une température suffisante et pendant une durée suffisante pour en retirer l'humidité ; et
(e) traitement thermique des pastilles séchées à une température d'environ 371°C (700°F) à environ 981°C (1800°F) dans une atmosphère inerte pendant une durée d'environ 0,1 à environ 1,0 heure, où les pastilles de carbone actif finales sont caractérisées par une vitesse d'attrition en poussière inférieure à 0,75 mg/100 cm³/minute, en l'absence d'un revêtement appliqué sur le grain.

15. Procédé selon la revendication 14 caractérisé en ce que le matériau liant organique est une résine, de préférence une résine naturelle, comme un composé de la colophane basé sur la colophane de bois, la colophane de gomme, ou le tallol, ou une résine synthétique comme un composé à base styrénique, un composé à base acrylique ou un composé à base phénolique.

16. Procédé selon la revendication 14 ou 15 caractérisé en ce que ledit matériau liant organique est une résine phénol-formaldéhyde.

17. Procédé selon la revendication 14, 15 ou 16 caractérisé en ce qu'il comprend de 5% à 30%, en masse, de matériau liant organique.

18. Procédé selon l'une quelconque des revendications 14 à 17 caractérisé en ce que l'étape (d) est conduite à une température d'environ 15°C (60°F) à environ 371°C (700°F) pendant environ 1 à environ 30 minutes.

19. Procédé selon l'une quelconque des revendications 14 à 18 caractérisé en ce que l'étape (e) est conduite à une température d'environ 537°C (1000°F) à environ 981°C (1800°F).

20. Procédé selon l'une quelconque des revendications 5 à 19 caractérisé en ce que lesdites pastilles crues ont une teneur en humidité de 55-65%, en masse.

21. Utilisation d'une pastille de carbone actif selon l'une quelconque des revendications 1 à 4, ou d'une pastille de carbone actif préparée comme défini dans l'une quelconque des revendications 5 à 20, dans un lit tassé pour adsorber/désorber des vapeurs.
